# EUROPÄISCHE PATENTSCHRIFT

(11) **EP 0 927 332 B1**
(45) Veröffentlichungstag und Bekanntmachung des Hinweises auf die Patenterteilung: **06.03.2002**
(21) Anmeldenummer: 97931618.9
(22) Anmeldetag: 17.06.1997
(51) Int. Cl.: G01B 9/02

(54) **VERFAHREN UND VORRICHTUNG ZUR FEHLERKORREKTUR EINES HETERODYN-INTERFEROMETERS**
METHOD AND DEVICE FOR HETERODYNE INTERFEROMETER ERROR CORRECTION
PROCEDE ET DISPOSITIF POUR CORRIGER L'ERREUR D'UN INTERFEROMETRE HETERODYNE

(30) Priorität: 17.09.1996 DE 19637777
(43) Veröffentlichungstag der Anmeldung: 07.07.1999
(73) Patentinhaber: Leica Microsystems Wetzlar GmbH, 35530 Wetzlar (DE)
(72) Erfinder: RINN, Klaus, D-35452 Heuchelheim (DE)
(74) Vertreter: Stamer, Harald
(86) Internationale Anmeldenummer: DE9701223
(87) Internationale Veröffentlichungsnummer: WO9812499

(56) Entgegenhaltungen:
- EP-A- 0 053 199
- EP-A- 0 623 802
- DE-A- 4 436 922

## Beschreibung

Hochgenaue Interferometermessungen, wie sie zum Beispiel für die Vermessung von Masken und Wafem in der Halbleiterindustrie erforderlich sind, haben eine Auflösung weit unter der Laserwellenlänge. Dazu wird die Phasenverschiebung elektronisch interpoliert. Hierbei entstehen Fehler, welche weit über der Auflösung des Meßaufbaues liegen und periodisch auftreten.

Kommerzielle hochauflösende Interferometer arbeiten alle nach dem Heterodynprinzip, wobei die beiden verwendeten Frequenzkomponenten durch unterschiedliche Polarisationen getrennt sind. Auch hier tritt ein entlang der Meßstrecke periodischer Fehler auf, welcher allerdings weniger aus der Ungenauigkeit der elektronischen Interpolation herrührt, sondern in mechanischen Spannungen in den vom Laserstrahl durchlaufenen Komponenten begründet liegt. Diese mechanischen Spannungen erzeugen Spannungsdoppelbrechung in den optischen Komponenten, die die ideale Polarisation der beiden Strahlkomponenten zueinander stören.

Die periodischen Fehler gehören zu einer ganzen Reihe von Fehlern, die die Auflösung und Wiederholbarkeit hochauflösender Interferometer erheblich beeinträchtigen. So sind beispielsweise als Fehlerursachen die schwankende Wellenlänge des Lasers, elektronische Fehler, optische Fehler oder auch atmosphärische Schwankungen in der Umgebung des Meßaufbaus bekannt. Da in den vergangenen Jahren die Auflösung der Interferometer in deutlichem Maße gesteigert werden konnte, wird damit auch die Beseitigung einzelner Fehler und ihrer Ursachen intensiv vorangetrieben.

So wird in der US 5 469 260 A ein hochauflösendes Interferometer als Bestandteil einer Positionsmeßvarrichtung beschrieben, bei welcher durch weitgehende Umhüllung der Strahlengänge und gezielte Zufuhr von Gas bekannter Temperatur und Zusammmensetzung der Einfluß von Luftdruckschwankungen und kurzfristigen Temperaturänderungen auf das Meßergebnis minimiert wird. Periodische Fehler werden dort jedoch nicht betrachtet.

Das Problem der periodischen Fehler bei interferometrischen Messungen ist aber seit langem bekannt. Auch die Hersteller kommerzieller Interferometer haben sich mit der Frage der periodischen Fehler bei interferometrischen Messungen befaßt. So wird dieses Problem auch in dem Artikel "Nonlinearity in Interferometer Measurements" von Robert C. Quenelle, Hewlett Packard Journal, April 1983, Seite 10, behandelt. Die Spitzenwerte des periodischen Fehlers werden bereits hier mit einer Größenordnung von 5 nm angegeben. Bisher war dieser Fehler einer Korrektur nicht zugänglich. Es bestand allerdings auch keine dringende Nowendigkeit eine solche Korrektur vorzunehmen, da bisher bekannte hochgenaue Interferometeranordnungen in ihrem Auflösungsvermögen oberhalb dieser 5 nm-Grenze blieben und damit der periodische Fehler als vernachlässigbar eingestuft werden konnte.

So befaßt sich die DE 40 31 291 A1 mit der Aufgabe, die Interpolation zu verbessern oder alternativ systematische periodische Fehler zu verringern, die durch polarisationsoptische Störungen auftreten. Dazu wird ein heterodynes Doppel-Interferometer angegeben, bei welchem der Strahlengang geteilt wird und die Meßsignale getrennt detektiert werden. Um die Polarisationsrichtungen der beiden Teilstrahlen ideal orthogonal zu einander ausrichten zu können, sind vor den beiden Meßdetektoren verstellbare Analysatoren angeordnet. Dabei ist in orthogonaler Anordnung der Analysatoren eine Kompensation der periodischen Fehler möglich oder alternativ bei Parallelanordnung der Durchlaßrichtungen der Analysatoren eine erhöhte Auflösung der Messung zu erreichen. Damit kann mit dieser Anordnung die Meßunsicherheit des heterodynen Doppel-Interferometers in den Submikrometerbereich verbessert werden.

Nachteilig an der vorbekannten Meßanordnung ist, daß erhebliche Veränderungen im Interferometeraufbau gegenüber bekannten Aufbauten erforderlich sind. So ist der zusätzliche Einbau einer Strahlaufteilung, eines zusätzlichen Detektors für den zweiten Teilstrahl sowie zweier Analysatoren in bestehende Interferometer-Aufbauten allein aus Platzgründen nicht ohne weiteres möglich. Außerdem bleiben periodische Fehler, die aus der elektronischen Interpolation resultieren, unbeeinflusst. Daher kann mit dieser Methode die Meßunsicherheit auch lediglich in den Submikrometerbereich verbessert werden.

Neue Interferometeranordnungen für höchstgenaue Messungen besitzen aber inzwischen ein Auflösungsvermögen in einer Größenordnung von unter einem Nanometer, so daß der periodische Fehler möglichst vollständig eliminiert werden muß.

Es ist daher Aufgabe der vorliegenden Erfindung, ein Verfahren und eine Vorrichtung zur Ausübung des Verfahrens zur Korrektur von allen periodischen Fehlern bei Interferometermessungen anzugeben, welche bei unverändertem Interferometeraufbau und höchstmöglicher Auflösung eingesetzt werden können.

Diese Aufgabe wird erfindungsgemäß durch die in den unabhängigen Patentansprüchen angegebenen Merkmale gelöst. Weitere vorteilhafte Weiterbildungen der Erfindung sind Gegenstand der Unteransprüche.

Die Erfindung geht von der Tatsache aus, daß der betrachtete Fehler periodisch ist mit einer Weglängenänderung in der optischen Weglänge des Interferometers um genau eine Wellenlänge des Meßlichts. Die Idee der Erfindung besteht darin, die Messung des Interferometers, welche mit einem periodischen Fehler behaftet ist, mit einer anderen, zusätzlichen bzw. ergänzenden Messung zu vergleichen, die keinen solchen periodischen Fehler aufweist. Dies geschieht in Form einer Kalibrier-Messung, mit der eine konstante Kalibrier-Strecke gemessen wird. Dazu wird beispielsweise die konstante Position einer ausgewählten Struktur auf einem Meßobjekt relativ zu einer beliebig gewählten Nullmarke auf diesem Meßobjekt bestimmt.

Dazu wird die Kalibrier-Strecke zu der konstanten Position der ausgewählten Struktur über einen ersten Anteil dieser Kalibrier-Strecke mit dem Heterodyn-Interferometer vermessen, der ergänzende zweite Teil der Kalibrier-Strecke mit dem zusätzlichen Wegmeßsystem. Dieselbe konstante Kalibrier-Strecke zu der ausgewählten Struktur wird nun zwecks Kalibrierung wiederholt vermessen, wobei der vom Interferometer vermessene erste Streckenanteil vor jeder Messung jeweils um einen kleinen Schritt vergrößert wird, entsprechend verändert sich der vom zusätzlichen Wegmeßsystem vermessene zweite Anteil. Die von den beiden Meßsystemen vermessenen Teilstrecken müssen in Summe stets die Kalibrier-Strecke ergeben. Ob es sich um eine Addition oder Subtraktion der Meßergebnisse handeln muß, hängt hierbei vom jeweiligen Meßaufbau und der gewählten Lage der Nullmarke auf dem Meßobjekt ab. Im folgenden wird daher von der vorzeichenrichtigen Addition gesprochen. Zur Ablaufsteuerung der im folgenden beschriebenen Verfahrensschritte und zur Erfassung und Auswertung der Meßwerte ist dem Meßaufbau ein Rechner zugeordnet.

Da der Meßspiegel im Meßstrahlengang des Interferometers an einem verfahrbaren Tisch, der das Meßobjekt trägt, befestigt ist, so wird die Änderung der vom Interferometer zu vermessenden Strecke durch Verfahren des Tisches bewerkstelligt. Die Änderung der vom Interferometer vermessenen Strecke ist für die angestrebte Erstellung einer Fehlerkurve notwendig und muß daher mit dem zusätzlichen Wegmeßsystem gemessen werden. Als zusätzliches Meßsystem in diesem Verfahren kann grundsätzlich jedes Meßgerät eingesetzt werden, das selbst keinen periodischen Fehler der beschriebenen Art aufweist und für die genaue Messung kleiner Strecken geeignet ist.

So kann in einer vorteilhaften Vorrichtung das Meßobjekt mit der für die Kalibrierung ausgewählten Struktur mittels eines Mikroskopobjektivs auf ein ortsmessendes optisches Antastsystem abgebildet werden. Dies kann beispielsweise eine CCD-Kamera oder ein positionsempfindlicher Detektor sein. Wird durch Verfahren des Tisches die ausgewählte Struktur verschoben, kann das ortsmessende optische Antastsystem die seitliche Ablage messen.

Die Erfindung ist auch anwendbar, wenn in dem Interferometeraufbau kein ortsmessendes Antastsystem benutzt wird, sondern auch wenn beispielsweise das auf dem verfahrbaren Tisch liegende Meßobjekt auf einen üblichen, nicht ortsauflösenden Helligkeitsdetektor abgebildet wird. Dazu wird das Meßobjekt mit einer auf dem Tisch angeordneten Mikropositioniereinheit mit Wegaufnehmer verbunden. Dann wird das Meßobjekt in konstanter relativer Lage zu dem Helligkeitsdetektor gehalten, indem beim Verfahren des Tisches die Mikropositioniereinheit eine gegenläufige und betragsgleiche Verschiebung des Meßobjekts auf dem Tisch vornimmt. Zur Regelung dieser gegenläufigen Bewegung werden die Signale des Helligkeitsdetektors herangezogen. In diesem Meßaufbau wird mit dem Wegaufnehmer die Verschiebung des Meßobjekts auf dem Tisch, die entgegengesetzt gleich dem Verfahrweg des Tisches und damit der Weglängenänderung im Meßstrahlengang des Interferometers ist, gemessen. In diesem Fall ist also der Wegaufnehmer des Mikropositioniersystems das ergänzende Wegmeßsystem. Zur Bestimmung der Kalibrier-Strecke wird dann der vom Wegaufnehmer gelieferte Meßwert entsprechend vorzeichenrichtig zum Meßergebnis des Interferometers addiert. Die Messung der Kalibrier-Strecke wird für verschiedene Tischpositionen wiederholt.

Die Verlängerung des ersten Anteils der Kalibrier-Strecke, der mit dem Interferometer vermessen wird, muß dabei in ausreichend kleinen Schritten erfolgen. Außerdem muss die Anzahl aller Kalibrier-Messungen ausreichend groß gewählt werden, um später die mathematische Erstellung einer Korrekturkurve zu ermöglichen. Weiterhin muß mit der gesamten Verlängerung des vom Interferometer vermessenen Streckenanteils während aller Kalibrier-Messungen mindestens eine optische Weglängenänderung im Meßstrahlengang des Heterodyn-Interferometers in der Größenordnung der Meßlichtwellenlänge vorgenommen werden.

Die so erhaltenen Kalibrier-Meßwerte für die konstante Kalibrier-Strecke müßten idealerweise immer denselben Wert haben. Aufgrund der schrittweisen Verlängerung der optischen Weglänge des Meßstrahlengangs des Interferometers bei den einzelnen Kalibrier-Messungen kommt jedoch der periodische Fehler zum Vorschein. Die ermittelten Kalibrier-Meßwerte sind also nicht konstant, sondern zeigen Abweichungen von einem Mittelwert. Dabei ist der Wert des periodischen Fehlers gleich für wiederkehrende gleiche Werte der Phasenlage des Interferometers.

Aus den Kalibrier-Meßwerten werden nun mit geeigneten mathematischen Verfahren die mit der Meßlichtwellenlänge periodischen Fehler herausgefiltert und daraus eine Fehlerkurve in Abhängigkeit von der Wellenlänge des Interferometers berechnet. Die möglichen mathematischen Verfahren sind in den Lehrbüchern der Mathematik ausführlich dargelegt und werden daher hier nicht weiter beschrieben. Als Beispiele seien hier lediglich die Fourieranalyse oder die Berechnung eines Sinusfits für die mit der Meßlichtwellenlänge periodischen Komponenten der Kalibrier-Meßwerte für die Kalibrier-Strecke genannt.

Nach Aufstellung dieser Fehlerkurve können alle weiteren, beliebigen Messungen entsprechend der bei der jeweiligen Messung bestimmten Phasenlage des Interferometers korrigiert werden. Die ermittelte Fehlerkurve ist zur Korrektur der Meßwerte anwendbar, solange die Ursachen des periodischen Fehlers, beispielsweise optischer Aufbau im Strahlengang des Interferometers, Meßlichtwellenlänge oder die Interpolation, konstant bleiben und die Information über die Phasenlage des Interferometers nicht verlorengeht. Ist dies nicht der Fall, muß die Fehlerkurve erneut bestimmt werden.

Höchstgenaue Interferometermessungen, die mit diesem neuen Verfahren zur Korrektur von periodischen Fehlern bei Interferometermessungen korrigiert werden, leisten eine Auflösung des gesamten Gerätes im Bereich von unter 5 nm Wiederholbarkeit.

Die Erfindung wird anhand von Ausführungsbeispielen mithilfe der schematischen Zeichnungen näher erläutert.
- ***Fig. 1***: zeigt ein erfindungsgemäßes Interferometer mit zusätzlicher CCD-Kamera zur Anwendung des erfindungsgemäßen Verfahrens.
- ***Fig. 2***: zeigt ein erfindungsgemäßes Interferometer mit zusätzlichem Mikropositioniersystem mit Wegaufnehmer zur Anwendung des erfindungsgemäßen Verfahrens.

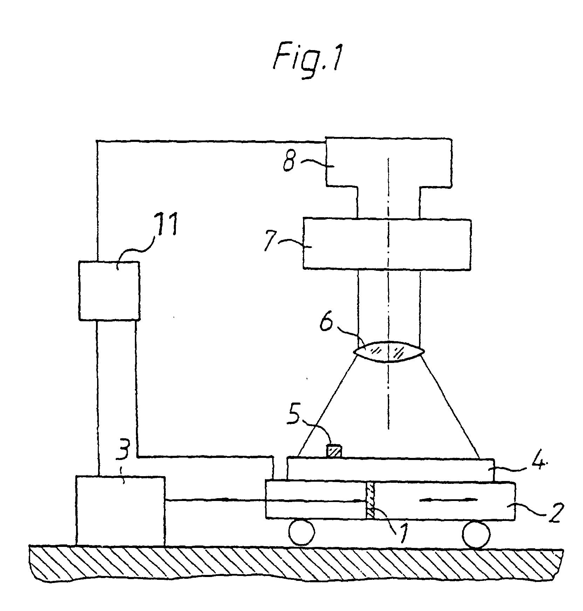

In ***Fig. 1*** ist ein Meßspiegel 1 an einem verfahrbaren Tisch 2 montiert. Der Meßspiegel 1 ist Bestandteil des Meßstrahlengangs eines Heterodyn-Interferometers 3. Auf dem verfahrbaren Tisch 2 liegt ein Messobjekt 4 mit einer ausgewählten Struktur 5. Dieses Meßobjekt 4 wird mit dem Objektiv 6 eines nicht weiter dargestellten Mikroskops betrachtet. Das Sichtfeld des Objektivs 6 wird auf eine CCD-Kamera 8 abgebildet. Die Position der optischen Achse der CCD-Kamera 8 relativ zum Interferometer 3 ist konstant. Zur Erfassung und Auswertung der Meßwerte und zur Ablaufsteuerung ist dem Meßaufbau ein Rechner 11 zugeordnet, der mit dem Tisch 2, dem Interferometer 3 und der CCD-Kamera 8 elektrisch verbunden ist.

Zu Beginn der Kalibrier-Messungen positioniert man durch Verfahren des Tisches 2 die ausgewählte Struktur 5 im Sichtfeld des Objektivs 6 und bestimmt die Position der Struktur 5 auf dem Meßobjekt 4.

Dazu wird mit dem Interferometer 3 ein erster Streckenanteil bis zu dem Meßspiegel 1 vermessen. Mit der CCD-Kamera 8 wird als ergänzender zweiter Streckenanteil der Kalibrier-Strecke der Abstand der ausgewählten Struktur 5 von einer gewählten Nullmarke gemessen. Aus dem Meßwert der interferometrischen Kalibrier-Messung und dem Meßwert der ergänzenden zweiten Kalibrier-Messung mit der CCD-Kamera wird durch vorzeichenrichtige Addition die Kalibrier-Strecke bestimmt.

Dann wird der Tisch 2 um ein kleines Stück verfahren, so daß sich der vom Interferometer 3 zu vermessende Kalibrier-Streckenanteil um einen geringen Betrag vergrößert. Entsprechend verändert sich der von der CCD-Kamera 8 zu vermessende Anteil der Kalibrier-Strecke zu der Struktur 5. Nun wird in einer weiteren Kalibrier-Messung erneut die Kalibrier-Strecke aus vorzeichenrichtiger Addition der Kalibrier-Meßwerte für den ersten und zweiten Kalibrier-Streckenanteil bestimmt. Ergibt sich dabei eine Abweichung des Kalibrier-Meßergebnisses aus dieser Kalibrier-Messung zu dem Ergebnis der vorangegangenen Kalibrier-Messung, so handelt es sich bei dieser Abweichung um einen Fehler, da in beiden Fällen die gleiche Struktur mit damit auch gleicher Position auf dem Meßobjekt 4 vermessen wurde.

Nun wird für eine ausreichende Anzahl weiterer Kalibrier-Messungen jeweils vor der Messung der Tisch 2 um ein kleines Stück in derselben Richtung verfahren, so daß nach Durchführung aller Kalibrier-Messungen der Tisch 2 mindestens einen Verfahrweg in der Größenordnung der Meßlichtwellenlänge zurückgelegt hat.

Obwohl die Position der ausgewählten Struktur 5 auf dem Meßobjekt 4 konstant ist, zeigen sich bei den Kalibrier-Messungen für die konstante Kalibrier-Strecke keine konstanten Meßergebnisse. Entsprechend dem periodischen Fehler bei der interferometrischen Messung, der sich im Verlauf der Kalibrier-Messungen mit schrittweise zunehmender Länge des Meßstrahlengangs im Interferometer 3 zeigt, zeigen die Kalibrier-Meßwerte Abweichungen vom konstanten Wert der Kalibrier-Strecke. Wenn der Meßstrahlengang im Interferometer 3 um genau eine Meßlichtwellenlänge verlängert wird, zeigt sich genau eine volle Periode des periodischen Fehlers.

Man trägt nun die ermittelten Meßwerte aus den Kalibrier-Messungen gegen den Verfahrweg des Tisches auf. Dann wird der periodische Fehleranteil der Meßergebnisse mit den bereits genannten mathematischen Verfahren , wie zum Beispiel einer Fourieranalyse oder einem Sinusfit, separiert. Aus den berechneten Fehleranteilen wird eine Fehlerkurve in Abhängigkeit von der Meßlichtwellenlänge aufgestellt. Anhand dieser Kurve werden dann die Interferometer-Meßwerte bei weiteren, beliebigen Messungen zu beliebigen Strukturen um den periodischen Fehler, der der ermittelten Phasenlage des Interferometers zugeordnet ist, korrigiert.

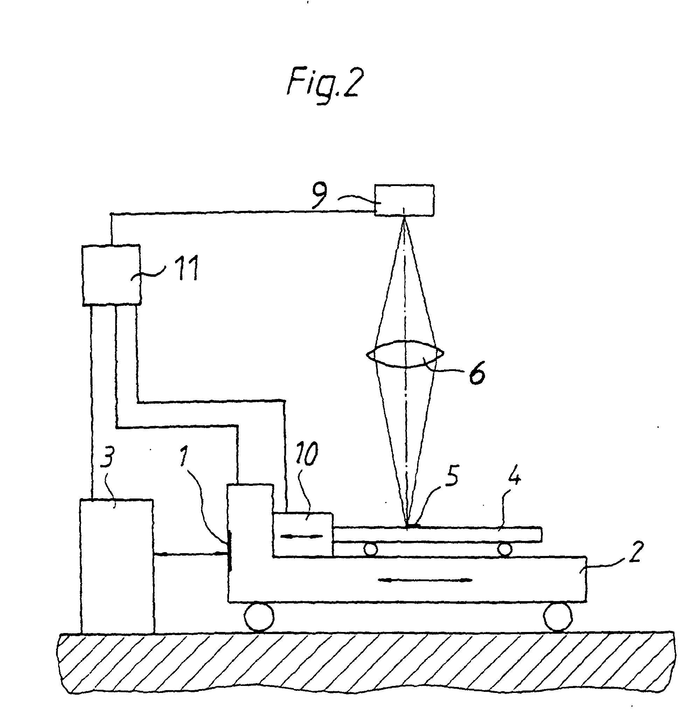

In ***Fig. 2*** ist ein Meßspiegel 1 an einem verfahrbaren Tisch 2 montiert. Der Meßspiegel 1 ist Bestandteil des Meßstrahlengangs eines Heterodyn-lnterferometers 3. Auf dem verfahrbaren Tisch 2 liegt ein Messobjekt 4 mit einer ausgewählten Struktur 5. Die ausgewählte Struktur 5 wird mit einem Objektiv 6 auf einen Helligkeitsdetektor 9 abgebildet und liefert damit ein definiertes Intensitätssignal am Ausgang des Heiligkeitsdetektors 9. Auf dem Tisch 2 ist eine Mikropositioniereinheit 10 mit Wegaufnehmer montiert, die mit dem Meßobjekt 4 verbunden ist und dieses verschieben kann. Der Wegaufnehmer mißt die Verschiebung des Meßobjekts 4 gegenüber seiner eigenen Nullmarke und stellt in diesem Aufbau das erfindungsgemäße zusätzliche Wegmeßsystem dar. Die relative Lage des Interferometers 3 und des Helligkeitsdetektors 9 zu einander ist konstant. Zur Erfassung und Auswertung der Meßwerte und zur Ablaufsteuerung ist dem Meßaufbau ein Rechner 11 zugeordnet, der mit dem Tisch 2, dem Interferometer 3, dem Helligkeitsdetektor 9 und der Mikropositioniereinheit 10 elektrisch verbunden ist.

Wenn das Meßobjekt 4 ohne Betätigung der Mikropositioniereinheit 10 nur mit dem Tisch 2 unter dem Objektiv 6 verfahren wird, wandern die verschiedenen Strukturen des Meßobjekts 4 unter dem Objektiv 6 durch und werden nacheinander auf den Helligkeitsdetektor 9 abgebildet. Dabei zeichnet der Helligkeitsdetektor 9 ein vom Verfahrweg des Tisches 2 abhängiges Intensitätsprofil entsprechend den durchgewanderten Strukturen auf. Aus diesem Intensitätsprofil läßt sich die Position der durchgewanderten Strukturen relativ zu einer beliebig gewählten Nullmarke bestimmen.

Die Kalibriermessung wird mit einer ausgewählten Struktur 5 durchgeführt. Sie wird auf den Helligkeitsdetektor 9 abgebildet und erzeugt dort ein spezifisches Ausgangssignal. Durch Beibehaltung des Ausgangsignals wird die ausgewählte Struktur 5 auf dem Meßobjekt 4 in konstanter relativer Lage zu dem Helligkeitsdetektor 9 gehalten.

In der ersten Kalibrier-Messung wird mit dem Interferometer 3 der erste Streckenanteil der Kalibrier-Strecke vom Interferometer 3 zum Meßspiegel 1 gemessen. Als ergänzenden zweiten Streckenanteil der Kalibrier-Strecke wird die vom Wegaufnehmer der Mikropositioniereinheit 10 gemessene Verschiebung des Meßobjekts 4 gegenüber seiner Nullmarke gemessen. Die Kalibrier-Stecke wird durch vorzeichenrichtige Addition der beiden Kalibrier-Streckenanteile bestimmt.

Für die weiteren Kalibrier-Messungen der Kalibrierstecke wird vor jeder Messung der Tisch 2 jeweils um ein kleines Stück in derselben Richtung verfahren, wodurch sich jeweils der erste, vom Interferometer 3 gemessene Streckenanteil der Kalibrier-Strecke, um ein kleines Stück vergrößert. Um das Meßobjekt 4 in konstanter relativer Lage zu dem Helligkeitsdetektor 9 zu halten, muß ein konstantes Helligkeitssignal am Helligkeitsdetektor 9 eingeregelt werden. Dazu nimmt beim Verfahren des Tisches 2 die Mikropositioniereinheit 10 eine gegenläufige Verschiebung des Meßobjekts 4 auf dem Tisch 2 vor. Zur Regelung dieser gegenläufigen Bewegung wird das Ausgangssignal des Helligkeitsdetektors 9 herangezogen. Die jeweils vorgenommene Verschiebung des Meßobjekts 4 auf dem Tisch 2, die vom Wegaufnehmer der Mikropositioniereinheit 10 gemessen wird, ist entgegengesetzt gleich dem Verfahrweg des Tisches 2 und damit gleich der Weglängenänderung im Meßstrahlengang des Interferometers 3. Der Wegaufnehmer mißt daher eine entsprechend größere Verschiebung des Meßobjekts 3 gegenüber der Nullmarke als ergänzenden zweiten Streckenanteil der Kalibrier-Strecke.

Zur wiederholten Bestimmung der Kalibrier-Strecke wird jeweils der vom Wegaufnehmer der Mikropositioniereinheit 10 gelieferte Meßwert dann entsprechend vorzeichenrichtig zum Meßergebnis des Interferometers 3 addiert.

Die Kalibrier-Messungen werden solange wiederholt, bis die insgesamt erreichte Längenänderung des vom Interferometer 3 gemessenen ersten Streckenanteils mindestens der Meßlichtwellenlänge entspricht. Dann werden die aus den Kalibrier-Messungen erhaltenen verschiedenen Meßwerte für die konstante Kalibrierstrecke in Abhängigkeit vom Verfahrweg des Tisches 2 dargestellt . Mit einem geeigneten mathematischen Verfahren werden die mit der Meßlichtwellenlänge periodischen Fehleranteile separiert und daraus eine Fehlerkurve in Abhängigkeit von der Meßlichtwellenlänge berechnet.

Mithilfe der Fehlerkurve werden dann die Meßwerte des Interferometers 3 bei weiteren, beliebigen Messungen um den Fehleranteil korrigiert, der der ermittelten Phasenlage des Interferometers 3 zugeordnet ist.

### Bezugszeichenliste

- 1: Meßspiegel
- 2: verfahrbarer Tisch
- 3: Heterodyn-Interferometer
- 4: Meßobjekt
- 5: ausgewählte Struktur
- 6: Objektiv
- 7: Tubus des Mikroskops
- 8: CCD-Kamera
- 9: Helligkeitsdetektor
- 10: Mikropositioniereinheit mit Wegaufnehmer
- 11: Rechner

## Patentansprüche

1. Verfahren zur Fehlerkorrektur eines Heterodyn-Interferometers (3), **gekennzeichnet durch** die Schritte:
a) Kalibrier-Messung einer konstanten Kalibier-Strecke zu einer ausgewählten Struktur (5) auf einem Meßobjekt (4), welches auf einem verfahrbaren Tisch (2) mit einem daran montierten Meßspiegel (1) liegt, **durch** Messung eines ersten, bis zu dem Meßspiegel (1) reichenden Anteils der Kalibrier-Strecke mit dem Heterodyn-Interferometer (3) und Messung eines ergänzenden zweiten Anteils der Kalibrier-Strecke mit einem zusätzlichen Wegmeßsystem, welches keinen entlang der Meßstrecke mit der Meßlichtwellenlänge periodischen Fehler aufweist,
b) Wiederholen der Kalibrier-Messung der konstanten Kalibrier-Strecke für eine ausreichende Anzahl veränderter Verhältnisse zwischen dem ersten und dem ergänzenden zweiten Anteil der Kalibrier-Strecke, wobei die Weglängenänderungen der Teilstecken jeweils klein gewählt werden und wobei die Summe der Streckenänderungen einer Teilstrecke mindestens einer optischen Weglängenänderung im Interferometer (3) in der Größenordnung der Messlichtwellenlänge entspricht,
c) mathematische Bestimmung des periodischen Fehleranteils der Kalibrier-Meßergebnisse für die konstante Kalibrier-Strecke als Fehlerkurve in Abhängigkeit von der Meßlichtwellenlänge des Interferometers und
d) Korrektur der Interferometer-Meßwerte beliebiger Messungen beliebiger Strukturen um den der jeweiligen Phasenlage des Interferometers (3) zugeordneten Fehlerwert.

2. Verfahren nach Anspruch 1, **dadurch gekennzeichnet, daß**
zur Einstellung verschiedener Verhältnisse zwischen dem ersten und dem zweiten Anteil der Kalibrier- Strecke der Tisch (2) mit dem Meßspiegel (1) vor den einzelnen Kalibrier-Messungen jeweils um einen kleinen Schritt verfahren wird.

3. Verfahren nach Anspruch 2, **dadurch gekennzeichnet, daß**
die ausgewählte Struktur (5) mit einem ortsempfindlichen Detektor erfaßt wird und der ergänzende zweite Anteil der Kalibrier-Strecke mit dem ortsempfindlichen Detektor gemessen wird.

4. Verfahren nach Anspruch 3, **dadurch gekennzeichnet, daß**
die ausgewählte Struktur (5) auf ein ortsmessendes optisches Antastsystem abgebildet wird und der ergänzende zweite Anteil der Kalibrier-Strecke mit dem ortsmessenden optischen Antastsystem gemessen wird.

5. Verfahren nach Anspruch 4, **dadurch gekennzeichnet, daß**
als ortsmessendes optisches Antastsystem eine CCD-Kamera (8) verwendet wird.

6. Verfahren nach Anspruch 2, **dadurch gekennzeichnet, daß**
die ausgewählte Struktur (5) auf einen Helligkeitsdetektor (9) abgebildet wird und der ergänzende zweite Anteil der Kalibrier-Strecke mit einem Wegaufnehmer einer Mikropositioniereinheit (10) gemessen wird, durch welche auf dem Tisch (2) das Meßobjekt (4) mit der ausgewählten Struktur (5) gegenläufig und betragsgleich zur Verfahrbewegung des Tisches (2) verschoben wird, wobei die Mikropositioniereinheit (10) mithilfe der Ausgangssignale des Helligkeitsdetektors (9) angesteuert wird.

7. Verfahren nach Anspruch 1, **dadurch gekennzeichnet, daß** die mathematische Bestimmung des periodischen Fehleranteils durch eine Fourieranalyse der Kalibrier-Meßergebnisse erfolgt.

8. Verfahren nach Anspruch 1, **dadurch gekennzeichnet, daß** die mathematische Bestimmung des periodischen Fehleranteils durch Erstellung eines Sinusfits der Kalibrier-Meßergebnisse erfolgt.

9. Vorrichtung zur Durchführung des Verfahrens nach Anspruch 1 mit
- einem Heterodyn-Interferometer (3) zur Messung der Verschiebung eines an einem verfahrbaren Tisch (2) befestigten Meßspiegels (1),
- einem auf dem Tisch (2) gelagerten Meßobjekt (4) und
- einem Rechner (11) zur Erfassung und Auswertung der Meßwerte zur Ablaufsteuerung,
**dadurch gekennzeichnet, daß**
- ein zusätzliches Wegmeßsystem (6,7,8;10) mit einer zugeordneten Nullmarke vorgesehen ist, wobei
- das Wegmeßsystem (6,7,8;10) keinen entlang der Meßstrecke periodischen Fehler aufweist und
- in einer definierten Stellung des Tisches (2) die Ablage einer ausgewählten Struktur (5) des Meßobjektes (4) gegenüber der Nullmarke bestimmt, und
- eine konstante Kalibrierstrecke als Summe zweier gegenläufig veränderbarer Streckenanteile vorgesehen ist, wobei
- einem ersten Streckenanteil der Meßwert des Interferometers (3) und
- einem zweiten Streckenanteil der vom zusätzlichen Wegmeßsystem (6,7,8;10) ermittelte Ablagemeßwert zugeordnet ist.

10. Vorrichtung nach Anspruch 9, **dadurch gekennzeichnet, daß**
als zusätzliches Wegmeßsystem ein ortsempfindlicher Detektor zur Erfassung der Lage der ausgewählten Struktur (5) und zur Messung des ergänzenden zweiten Anteils der Kalibrier-Strecke montiert ist.

11. Vorrichtung nach Anspruch 10, **dadurch gekennzeichnet, daß**
als zusätzliches Wegmeßsystem ein ortsmessendes optisches Antastsystem montiert ist, auf welches die ausgewählte Struktur (5) mit einem Objektiv (6) abgebildet wird.

12. Vorrichtung nach Anspruch 11, **dadurch gekennzeichnet, daß**
als ortsmessendes optisches Antastsystem eine CCD-Kamera (8) montiert ist.

13. Vorrichtung nach Anspruch 9, **dadurch gekennzeichnet, daß**
in den Meßaufbau ein Helligkeitsdetektor (9) integriert ist, auf den die ausgewählte Struktur (5) mit dem Objektiv (6) abgebildet wird, und als zusätzliche Wegmeßsystem ein Wegaufnehmer einer auf dem Tisch (2) montierten und mit dem Ausgangssiggnal des Helligkeitsdetektors (9) angesteuerten Mikropositioniereinheit (10) vorgesehen ist, die eine Verschiebung des Meßobjekts (4), welche der Tischverfahrbewegung gegenläufig ist, durchführt.

## Claims

1. Method for error correction of a heterodyne interferometer (3), **characterised by** the steps:
a) calibrating measurement of a constant calibrating distance of a selected structure (5) on a measurement object (4), which lies on a movable table (2) with a measuring mirror (1) mounted thereat, by measurement of a first portion, which reaches to the measuring mirror (1), of the calibrating distance by the heterodyne interferometer (3) and measurement of an augmenting second portion of the calibrating distance by an additional travel-measuring system, which does not display any error periodic with the measurement light wavelength along the measurement distance,
b) repetition of the calibrating measurement of the constant calibrating distance for a sufficient number of changed conditions between the first and the augmenting second portion of the calibrating distance, wherein the changes in travel length of the partial distances are chosen to be small each time and wherein the sum of the changes in distance of a part distance corresponds with at least one optical change in travel length in the interferometer (3) in the order of magnitude of the measurement light wavelength,
c) mathematical ascertainment of the periodic error component of the calibration measurement results for the constant calibrating distance as error curve in dependence on the measurement light wavelength of the interferometer and
d) correction of the interferometer measurement values of any desired measurements of any desired structures around the error value associated with the respective phase relationship of the interferometer (3).

2. Method according to claim 1, **characterised in that** a small step is moved through each time before the individual calibration measurements for the setting of different conditions between the first and the second portion of the calibrating distance of the table (2) with the measurement mirror (1).

3. Method according to claim 2, **characterised in that** the selected structure (5) is detected by a location-sensitive detector and the augmenting second portion of the calibrating distance is measured by the location-sensitive detector.

4. Method according to claim 3, **characterised in that** the selected structure (5) is imaged onto a location-measuring optical scanning system and the augmenting second portion of the calibrating distance is measured by the location-measuring optical scanning system.

5. Method according to claim 4, **characterised in that** a charge-coupled device camera (8) is used as location-measuring optical scanning system.

6. Method according to claim 2, **characterised in that** the selected structure (5) is imaged onto a brightness detector (9) and the augmenting second portion of the calibrating distance is measured by a travel pick-up of a micropositioning unit (10), by which the measurement object (4) with the selected structure (5) is moved on the table (2) in opposite sense and equal in amount to the displacing movement of the table (2), wherein the micropositioning unit (10) is controlled in drive with the aid of the output signals of the brightness detector (9).

7. Method according to claim 1, **characterised in that** the mathematical ascertainment of the periodic error component takes place by a Fourier analysis of the calibration measurement results.

8. Method according to claim 1, **characterised in that** the mathematical ascertainment of the periodic error component takes place by setting up a sine fit of the calibration measurement results.

9. Device for the performance of the method according to claim 1 with
- a heterodyne interferometer (3), for the measurement of the displacement of a measuring mirror (1) fastened at a movable table (2),
- a measurement object (4) borne on the table (2) and
- a computer (11) for the registration and evaluation of the measurement values and for sequence control,
**characterised in that**
- an additional travel-measuring system (6, 7, 8; 10) is provided with an associated zero mark, wherein
- the travel-measuring system (6, 7, 8; 10) does not display any error which is periodic along the measuring distance and
- in a defined setting of the table (2) ascertains the deviation of a selected structure (5) of the measurement object (4) from the zero mark and
- a constant calibrating distance is provided as sum of two distance portions variable in opposite sense, wherein
- the measurement value of the interferometer (3) is associated with a first distance portion and
- the deviation measurement value ascertained by the additional travel-measuring system (6, 7, 8; 10) is associated with a second distance portion.

10. Device according to claim 9, **characterised in that** a location-sensitive detector for detection of the position of the selected structure (5) and for measurement of the augmenting second portion of the calibrating distance is mounted as additional travel-measuring system.

11. Device according to claim 10, **characterised in that** a location-measuring optical scanning system, onto which the selected structure (5) is imaged by an objective (6), is mounted as additional travel-measuring system.

12. Device according to claim 11, **characterised in that** a charge-coupled device camera (8) is mounted as location-measuring optical scanning system.

13. Device according to claim 9, **characterised in that** a brightness detector (9), onto which the selected structure (5) is imaged by the objective (6), is integrated in the measurement build-up and a travel pick-up of a micropositioning unit (10), which is mounted on the table (2) and controlled in drive by the output signal of the brightness detector (9) and which carries out a displacement of the measurement object (4) in a sense opposite to the table displacement movement, is provided as additional travel-measuring system.

## Revendications

1. Procédé pour corriger l'erreur d'un interféromètre hétérodyne (3), **caractérisé par** les étapes :
a) mesure de calibrage d'un chemin de calibrage constant vers une structure sélectionnée (5) sur un objet de mesure (4) qui repose sur une table déplaçable (2) avec un miroir de mesure (1) monté sur celle-ci, par la mesure d'une première partie du chemin de calibrage s'étendant jusqu'au miroir de mesure (1) avec l'interféromètre hétérodyne (3) et la mesure d'une deuxième partie complémentaire du chemin de calibrage avec un système de détection de déplacement additionnel, qui ne présente pas d'erreur périodique le long du chemin de mesure avec la longueur d'onde de lumière de mesure,
b) répétition de la mesure de calibrage du chemin de calibrage constant pour un nombre suffisant de rapports modifiés entre la première et la deuxième partie complémentaire du chemin de calibrage, où des modifications de la longueur des chemins partiels sont respectivement sélectionnées pour qu'elles soient petites et où la somme des modifications d'un chemin partiel correspond au moins à une modification optique de la longueur du chemin dans l'interféromètre (3) de l'ordre de grandeur de la longueur d'onde de la lumière de mesure,
c) détermination mathématique d'une part d'erreur périodique des résultats de mesure de calibrage pour le chemin de calibrage constant comme courbe d'erreur en fonction de la longueur d'onde de la lumière de mesure de l'interféromètre et
d) correction des valeurs de mesure d'interféromètre de mesures sélectives de structures sélectives selon la valeur d'erreur associée à la position de phase respective de l'interféromètre (3).

2. Procédé selon la revendication 1, **caractérisé en ce que** pour le réglage de rapports différents entre la première et la deuxième partie du chemin de calibrage, la table (2) avec le miroir de mesure (1), avant les mesures de calibrage individuelles, est déplacée respectivement d'un petit pas.

3. Procédé selon la revendication 2, **caractérisé en ce que** la structure sélectionnée (5) est détectée avec un détecteur sensible au lieu et **en ce que** la deuxième partie complémentaire du chemin de calibrage est mesurée avec le détecteur sensible au lieu.

4. Procédé selon la revendication 3, **caractérisé en ce que** la structure- sélectionnée (5) est reproduite sur un système d'exploration optique mesurant le lieu et **en ce que** la deuxième partie complémentaire du chemin de calibrage est mesurée avec le système d'exploration optique mesurant le lieu.

5. Procédé selon la revendication 4, **caractérisé en ce qu'**on utilise comme système d'exploration optique mesurant le lieu une caméra CCD (8).

6. Procédé selon la revendication 2, **caractérisé en ce que** la structure sélectionnée (5) est reproduite sur un détecteur de luminosité (9) et que la deuxième partie complémentaire du chemin de calibrage est mesurée avec un capteur de. déplacement d'une unité de micro-positionnement (10) par laquelle sur la table (2), l'objet de mesure (4) avec la structure sélectionnée (5) est déplacé en sens inverse et selon la même quantité au mouvement de déplacement de la table (2), où l'unité de micro-positionnement (10) est commandée à l'aide des signaux de sortie du détecteur de luminosité (9).

7. Procédé selon la revendication 1, **caractérisé en ce que** la détermination mathématique de la part d'erreur périodique a lieu par une analyse de Fourier des résultats de mesure de calibrage.

8. Procédé selon la revendication 1, **caractérisé en ce que** la définission mathématique de la part d'erreur périodique a lieu par l'établissement d'un essai de localisation d'erreur sinusoïdal des résultats de mesure de calibrage.

9. Dispositif pour la mise en oeuvre du procédé selon la revendication 1 avec
- un interféromètre hétérodyne (3) pour la mesure du déplacement d'un miroir de mesure (1) fixé à une table déplaçable (2),
- un objet de mesure (4) situé sur la table (2) et
- un calculateur (11) pour la détection et l'évaluation des valeurs de mesure pour la commande de déroulement,
**caractérisé en ce qu'**il est prévu un système de mesure de déplacement additionnel (6, 7, 8 ; 10) avec une marque zéro associée, où
- le système de mesure de déplacement (6, 7, 8 ; 10) ne présente pas d'erreur périodique le long du chemin de mesure et
- **en ce qu'**il est déterminé dans une position définie de la table (2) le dépôt d'une structure sélectionnée (5) de l'objet de mesure (4) par rapport à la marque zéro et
- **en ce qu'**il est prévu un chemin de calibrage constant en tant que somme de deux parties de chemin modifiables en sens inverse où
- il est associé à une première partie de chemin la valeur de mesure de l'interféromètre (3) et
- à une deuxième partie de chemin la valeur de mesure de dépôt déterminée par le système de mesure de déplacement additionnel (6, 7, 8 ; 10).

10. Dispositif selon la revendication 9, **caractérisé en ce qu'**il est monté comme système de mesure de déplacement additionnel un détecteur sensible au lieu pour détecter la position de la structure sélectionnée (5) et pour mesurer la deuxième partie complémentaire du chemin de calibrage.

11. Dispositif selon la revendication 10, **caractérisé en ce qu'**il est monté comme système de mesure de déplacement additionnel un système d'exploration optique mesurant le lieu sur lequel est représenté la structure sélectionnée (5) avec un objectif (6)

12. Dispositif selon la revendication 11, **caractérisé en ce qu'**une caméra CCD (8) est montée comme système d'exploration optique mesurant le lieu.

13. Dispositif selon la revendication 9, **caractérisé en ce qu'**il est intégré dans la construction de mesure un détecteur de luminosité (9) sur lequel est représenté la structure sélectionnée (5) avec l'objectif (6) et **en ce qu'**il est prévu comme système de mesure de déplacement additionnel un capteur de déplacement d'une unité de micro-positionnement (10) montée sur la table (2) et commandée avec le signal de sortie du détecteur de luminosité (9), qui exécute un déplacement de l'objet de mesure (4) qui est contraire au mouvement de déplacement de la table.
